# EUROPÄISCHE PATENTSCHRIFT

(11) **EP 3 301 399 B1**
(45) Veröffentlichungstag und Bekanntmachung des Hinweises auf die Patenterteilung: **10.11.2021**
(21) Anmeldenummer: 17020422.6
(22) Anmeldetag: 13.09.2017
(51) Int. Cl.: G01C 21/36, G08G 1/0962, B60K 31/18

(54) **VERFAHREN ZUM ANZEIGEN EINER AKTUELL ZULÄSSIGEN HÖCHSTGESCHWINDIGKEIT UND ENTSPRECHENDE ANZEIGEEINRICHTUNG, NAVIGATIONSEINRICHTUNG UND KRAFTFAHRZEUG**
METHOD FOR DISPLAYING THE CURRENT AUTHORISED MAXIMUM SPEED AND CORRESPONDING DISPLAY DEVICE, NAVIGATION DEVICE AND MOTOR VEHICLE
PROCÉDÉ D'AFFICHAGE DE LA VITESSE MAXIMALE AUTORISÉE ACTUELLE ET ÉQUIPEMENT D'AFFICHAGE, DISPOSITIF DE NAVIGATION ET VÉHICULE À MOTEUR CORRESPONDANTS

(30) Priorität: 30.09.2016 CZ 20160610
(43) Veröffentlichungstag der Anmeldung: 04.04.2018
(73) Patentinhaber: Skoda Auto a.s., 29301 Mladá Boleslav (CZ)
(72) Erfinder: WEBER, Norbert, 12000 Praha (CZ)

(56) Entgegenhaltungen:
- WO-A1-2013/139840
- DE-A1-102009 019 023
- FR-A1- 2 991 045
- JP-A- H08 128 838
- US-A1- 2011 288 770

## Beschreibung

Die Erfindung betrifft ein Verfahren zum Anzeigen einer für einen aktuell befahrenen Streckenabschnitt erfassten, aktuell zulässigen Höchstgeschwindigkeit mittels einer Anzeigeeinrichtung für ein Kraftfahrzeug, wobei ein Symbol auf der Anzeigeeinrichtung angezeigt wird, welches einen Zahlenwert umfasst, der die aktuell zulässige Höchstgeschwindigkeit repräsentiert. Zur Erfindung gehören auch die Anzeigeeinrichtung die zur Durchführung des Verfahrens, sowie ein Kraftfahrzeug und eine Navigationseinrichtung mit einer solchen Anzeigeeinrichtung.

Es ist bekannt, dass aktuell zulässige Höchstgeschwindigkeiten im Kraftfahrzeug beispielsweise im Kombiinstrument oder auf einer Anzeigeeinrichtung eines Navigationsgeräts angezeigt werden können. Geschwindigkeitsbegrenzungen, die durch entsprechende Verkehrsschilder oder Verkehrszeichen gekennzeichnet sind, können beispielsweise mit einer Außenkamera des Kraftfahrzeugs erfasst und die entsprechende durch diese Verkehrszeichen vorgegebene aktuell zulässige Höchstgeschwindigkeit durch eine entsprechende Verkehrszeichenerkennungssoftware erkannt werden. Üblicherweise erfolgt dabei die Anzeige der aktuell zulässigen Höchstgeschwindigkeit statisch und ist beispielsweise einem fixen Ort des Kombiinstruments oder der Anzeigeeinrichtung des Navigationsgeräts zugewiesen. Zusätzlich zur aktuell zulässigen Höchstgeschwindigkeit können in einem Kraftfahrzeug üblicherweise noch vielzählige weitere Informationen angezeigt werden. Dadurch gestalten sich Anzeigen mitunter sehr unübersichtlich, was leicht zu einem Übersehen wichtiger Informationen führen kann. Gerade Geschwindigkeitsbegrenzungen sind dabei besonders sicherheitsrelevant. Werden Geschwindigkeitsbegrenzungen vom Fahrer übersehen, oder beispielsweise auch Änderungen von Geschwindigkeitsbegrenzungen, so kann dies schwerwiegende Folgen haben.

Die DE 2009 019 023 A1 beschreibt ein Verfahren und eine Vorrichtung zur Steuerung einer Anzeigeeinheit eines Fahrzeugs. Dabei werden auf der Anzeigeeinheit eine Fahrtroute, eine aktuelle Fahrzeugposition auf der Fahrtroute und ein aktueller ermittelter Geschwindigkeitshinweis ausgegeben. Dabei ist es vorgesehen, dass der Geschwindigkeitshinweis bei Veränderung der Fahrzeugposition direkt hinter der Fahrzeugposition links und rechts neben dem Straßenverlauf der Fahrtroute ausgegeben wird. Der Geschwindigkeitshinweis wird dabei vorzugsweise so lange direkt hinter der Fahrzeugposition links und rechts neben dem Straßenverlauf ausgegeben bis zumindest ein weiterer näher dargestellter Geschwindigkeitshinweis erfasst wird.

Die US 2011/0288770 A1 beschreibt ein Höchstgeschwindigkeitsänderungs-Benachrichtigungssystem für mobile Kommunikationsgeräte. Dabei können auf einem Display eines mobilen Geräts Navigationsinformationen einschließlich einer mit dem mobilen Gerät aktuell befahrenen Straße dargestellt werden, sowie eine Anzeige einer aktuellen Geschwindigkeitsbegrenzung. Die Anzeige der Geschwindigkeitsbegrenzung erfolgt dabei immer an der gleichen Position der Anzeigeeinrichtung. Zusätzlich wird ein die aktuelle Position des Kraftfahrzeugs repräsentierendes Symbol angezeigt.

Aufgabe der vorliegenden Erfindung ist es daher, ein Verfahren zum Anzeigen einer aktuell zulässigen Höchstgeschwindigkeit, eine Anzeigeeinrichtung, eine Navigationseinrichtung und ein Kraftfahrzeug bereitzustellen, welche eine Verbesserung hinsichtlich der Anzeige der aktuell zulässigen Höchstgeschwindigkeit ermöglichen.

Diese Aufgabe wird gelöst durch ein Verfahren, eine Anzeigeeinrichtung, eine Navigationseinrichtung und ein Kraftfahrzeug mit den Merkmalen gemäß den unabhängigen Ansprüchen 1 und 4, bzw. den abhängigen Ansprüchen 5 und 6. Vorteilhafte Ausgestaltungen der Erfindung sind in den abhängigen Ansprüchen 2 und 3 angegeben.

Gemäß dem erfindungsgemäßen Verfahren zum Anzeigen einer für einen aktuell befahrenen Streckenabschnitt erfassten, aktuell zulässigen Höchstgeschwindigkeit mittels einer Anzeigeeinrichtung für ein Kraftfahrzeug wird ein Symbol auf der Anzeigeeinrichtung angezeigt, welches einen Zahlenwert umfasst, der die aktuell zulässige Höchstgeschwindigkeit repräsentiert. Weiterhin erfolgt eine von einer Änderung des Zahlenwerts verschiedene Änderung des Symbols in Abhängigkeit von einer Änderung zumindest eines erfassten Umgebungsparameters. Der zumindest eine erfasste Umgebungsparameter stellt dabei eine aktuelle geographische Position dar, wobei weiterhin mittels der Anzeigeeinrichtung eine geographische Kartendarstellung angezeigt wird, das Symbol in der geographischen Kartendarstellung angezeigt wird, und wobei eine Position des angezeigten Symbols in Bezug auf die Kartendarstellung in Abhängigkeit von der Änderung der erfassten aktuellen geo-graphischen Position geändert wird. Dabei wird zur Repräsentation der aktuellen Position des Kraftfahrzeugs das Symbol an der aktuellen geographischen Position in der Kartendarstellung dargestellt und kein die aktuelle Position repräsentierendes weiteres Symbol angezeigt.

Durch eine Änderung des Symbols, worunter also erfindungsgemäß nicht lediglich die Änderung des Zahlenwerts verstanden werden soll, der die aktuell zulässige Höchstgeschwindigkeit angibt, kann die Aufmerksamkeit des Fahrers deutlich besser auf die aktuell zulässige Höchstgeschwindigkeit gelenkt werden. Auch resultieren hieraus deutlich flexiblere und situationsangepasstere Anzeigemöglichkeiten des die aktuell zulässige Höchstgeschwindigkeit repräsentierenden Symbols, was durch die Abhängigkeit von der Änderung des zumindest einen erfassten Umgebungsparameters ermöglicht wird und wie zu vorteilhaften Ausgestaltungen der Erfindung näher beschrieben wird. Hierdurch lässt sich vorteilhafterweise die Verkehrssicherheit deutlich erhöhen.

Erfindungsgemäß stellt der zumindest eine erfasste Umgebungsparameter eine aktuelle geografische Position, insbesondere in Form von GPS-Daten, dar. Zum Erfassen der aktuellen geografischen Position kann beispielsweise ein Positionssignal eines GNSS (Global Navigation Satellite System), zum Beispiel des GPS (Global Positioning System) erfasst werden, beispielsweise durch eine geeignete Lokalisierungseinrichtung bzw. einen entsprechenden Empfänger für ein solches Positionssignal, wie zum Beispiel ein GPS-Empfänger. Eine Änderung des die aktuell zulässige Höchstgeschwindigkeit repräsentierenden Symbols korrespondierend zur aktuellen Position bzw. Positionsänderungen ermöglicht es vorteilhafterweise, die aktuell zulässige Höchstgeschwindigkeit mit der aktuellen Position in Verbindung zu bringen.

Die erfasste aktuelle geographische Position bezieht sich dabei auf die Position der Anzeigeeinrichtung und sofern diese in einem erfindungsgemäße Kraftfahrzeug angeordnet ist und/oder Teil einer erfindungsgemäßen Navigationseinrichtung ist, ebenso auf die Position des Kraftfahrzeugs bzw. der Navigationseinrichtung.

Dabei ist es erfindungsgemäß besonders vorteilhaft, dass mittels der Anzeigeeinrichtung eine geografische Kartendarstellung angezeigt wird, wobei das Symbol in der geografischen Kartendarstellung angezeigt wird und wobei eine Position des angezeigten Symbols in Bezug auf die Kartendarstellung in Abhängigkeit von der Änderung der erfassten aktuellen geografischen Position geändert wird. Analog zu einer Navigationsanzeige, die beispielsweise auf einer Kartendarstellung die aktuelle Position anzeigt, wird erfindungsgemäß an der erfassten aktuellen Position die korrespondierende zulässige Höchstgeschwindigkeit angezeigt. Das diese Höchstgeschwindigkeit repräsentierende Symbol bewegt sich damit, bei Bewegung des Kraftfahrzeugs, entsprechend mit der Positionsänderung auf der angezeigten Kartendarstellung mit. Blickt ein Fahrer beispielsweise auf die Kartendarstellung, um festzustellen auf welcher Straße er sich gerade befindet, so wird ihm auf diese Weise gleichzeitig auch kenntlich gemacht, ob und welche Geschwindigkeitsbegrenzung für den aktuell befahrenen Streckenabschnitt gerade gilt. Gerade wie im Stand der Technik üblich, bei einer Anzeige der Geschwindigkeitsbegrenzung zum Beispiel im Kombiinstrument, besteht keinerlei Verbindung zwischen der Anzeige der Geschwindigkeitsbegrenzung und der aktuell befahrenen Straße. Dies müsste dann entsprechend durch einen separaten Blick auf die Navigationsanzeige in Erfahrung gebracht werden. Gemäß der Erfindung jedoch können alle nötigen Navigationsinformationen inklusive der wichtigen Angaben über aktuell zulässige Höchstgeschwindigkeiten auf einen Blick erfasst werden.

Erfindungsgemäß wird das Symbol an der aktuellen geografischen Position in der Kartendarstellung dargestellt, wobei sich die Position bezüglich der Kartendarstellung bei Änderung der aktuellen geografischen Position in der Kartendarstellung korrespondierend ändert. Wie beschrieben bewegt sich das dargestellte Symbol, welches die aktuell zulässige Höchstgeschwindigkeit angibt, korrespondierend zur Bewegung des Kraftfahrzeugs in der Kartendarstellung mit. Dadurch kann der Fahrer sehr einfach seine aktuelle Position mit der aktuell zulässigen Höchstgeschwindigkeit assoziieren. Das Symbol wird an der aktuellen geografischen Position angezeigt, und repräsentiert damit nicht nur die aktuell zulässige Höchstgeschwindigkeit, sondern gleichzeitig auch die aktuelle Position des Kraftfahrzeugs, wobei auf die separate Anzeige eines den aktuellen Standort oder die aktuelle Position repräsentierenden weiteren Symbol verzichtet wird, was die Übersichtlichkeit der dargestellten Anzeige erhöht.

Bei einer weiteren sehr vorteilhaften Ausgestaltung der Erfindung stellt die Änderung des Umgebungsparameters eine Änderung der aktuell zulässigen Höchstgeschwindigkeit dar. Eine Änderung des die aktuell zulässige Höchstgeschwindigkeit repräsentierenden Symbols, wobei unter dieser Änderung wiederum nicht die Änderung des Zahlenwerts an sich zu verstehen ist, bei einer Änderung der aktuell zulässigen Höchstgeschwindigkeit ist besonders vorteilhaft, da so der Benutzer deutlich besser auf Änderungen der Geschwindigkeitsbegrenzung hingewiesen werden kann.

Bei einer vorteilhaften Ausgestaltung der Erfindung wird hierbei die optische Erscheinung des Symbols bei erfasster Änderung der aktuell zulässigen Höchstgeschwindigkeit, zum Beispiel für eine begrenzte vorbestimmbare Zeitdauer, geändert, insbesondere wobei die optische Erscheinung dadurch geändert wird, indem zumindest ein Teil des Symbols blinkend dargestellt wird. Dadurch kann der Fahrer besonders stark auf Geschwindigkeitsänderungen von Geschwindigkeitsvorgaben aufmerksam gemacht werden. Üblicherweise werden bei Änderungen der Geschwindigkeitsbegrenzung, zum Beispiel bei Anfahrt auf eine Baustelle mit aufeinanderfolgenden Geschwindigkeitsbegrenzungen von 120 km/h, dann 100 km/h, dann 80 km/h, lediglich die Zahlenwerte in einer fließenden Abfolge in der Darstellung geändert. Dies wird sehr häufig von Fahrern übersehen und führt in erhöhtem Maße zu Unfällen. Gerade aber in solchen Situationen, insbesondere wenn Geschwindigkeitsbegrenzungsänderungen unerwartet auftreten, wie beispielsweise im Falle einer Baustelle, kann durch eine Darstellungsänderung in Anpassung an diese erfasste Umgebungssituationsänderung besonders effektiv ein Warnhinweis und eine Kenntlichmachung dieser geänderten Umstände an den Fahrer ausgegeben werden.

Des Weiteren betrifft die Erfindung eine Anzeigeeinrichtung für ein Kraftfahrzeug zum Anzeigen einer für einen aktuell befahrenen Streckenabschnitt erfassten, aktuell zulässigen Höchstgeschwindigkeit, wobei die Anzeigeeinrichtung dazu ausgelegt ist, ein Symbol auf der Anzeigeeinrichtung anzuzeigen, welches einen Zahlenwert umfasst, der die aktuell zulässige Höchstgeschwindigkeit repräsentiert. Des Weiteren ist die Anzeigeeinrichtung dazu ausgelegt, eine von einer Änderung des Zahlenwerts an sich verschiedene Änderung des Symbols in Abhängigkeit von einer Änderung zumindest eines erfassten Umgebungsparameters zu bewirken. Dabei ist die Anzeigeeinrichtung dazu ausgelegt, eine von einer Änderung des Zahlenwerts verschiedene Änderung des Symbols in Abhängigkeit von einer Änderung zumindest eines erfassten Umgebungsparameters zu bewirken, wobei der zumindest eine erfasste Umgebungsparameter eine aktuelle geographische Position darstellt. Weiterhin ist die Anzeigeeinrichtung dazu ausgelegt, eine geographische Kartendarstellung anzuzeigen und das Symbol in der geographischen Kartendarstellung anzuzeigen, und wobei die Anzeigeeinrichtung dazu ausgelegt ist, eine Position des angezeigten Symbols in Bezug auf die Kartendarstellung in Abhängigkeit von der Änderung der erfassten aktuellen geographischen Position zu ändern. Zudem ist die Anzeigeeinrichtung dazu ausgelegt, zur Repräsentation der aktuellen Position des Kraftfahrzeugs das Symbol an der aktuellen geographischen Position in der Kartendarstellung darzustellen, ohne dass ein die aktuelle Position repräsentierendes weiteres Symbol angezeigt wird.

Die für das erfindungsgemäße Verfahren und seine Ausgestaltungen beschriebenen Merkmale, Merkmalskombinationen und deren Vorteile gelten in gleicher Weise für die erfindungsgemäße Anzeigeeinrichtung. Darüber hinaus ermöglichen die im Zusammenhang mit dem erfindungsgemäßen Verfahren beschriebenen Verfahrensschritte die Weiterbildung der erfindungsgemäßen Anzeigeeinrichtung durch weitere gegenständliche Merkmale.

Darüber hinaus betrifft die Erfindung auch eine Navigationseinrichtung mit einer erfindungsgemäßen Anzeigeeinrichtung, sowie auch ein Kraftfahrzeug mit einer erfindungsgemäßen Anzeigeeinrichtung, sowie auch ein Kraftfahrzeug mit einer erfindungsgemäßen Navigationseinrichtung.

Gemäß vorteilhaften Weiterbildungen kann das Kraftfahrzeug und/oder die Navigationseinrichtung beispielsweise eine Positionsbestimmungseinrichtung, wie beispielsweise einen GPS-Empfänger, aufweisen um die aktuelle geografische Position zu bestimmen. Weiterhin kann das Kraftfahrzeug beispielsweise eine oder mehrere Außenkameras aufweisen, die zur Verkehrszeichenerkennung geeignet sind, sodass die aktuell zulässige Höchstgeschwindigkeit auf einem gegebenen Streckenabschnitt kamerabasiert erfasst werden kann. Hierzu kann das Kraftfahrzeug weiterhin auch einen Speicher mit einer Verkehrszeichenerkennungssoftware, die zur Verkehrszeichenerkennung auf Basis der von der Außenkamera aufgenommenen Bilder und insbesondere zur Erfassung der aktuell zulässigen Höchstgeschwindigkeit aus diesen Bildern geeignet ist. Die Erfassung der aktuellen Höchstgeschwindigkeit lässt sich jedoch nicht nur durch kamerabasierte Verkehrszeichenerkennung realisieren. Alternativ oder zusätzlich können auch Navigationsdaten der Navigationseinrichtung genutzt werden, um aktuell zulässige Höchstgeschwindigkeiten zu bestimmen, insbesondere auch unabhängig von einer kamerabasierten Erfassung. Hierzu können beispielsweise zu entsprechenden Streckenabschnitten in den Navigationsdaten bereits Geschwindigkeitsbegrenzungen, zum Beispiel innerorts, oder auf Landstraßen, abgelegt sein. Durch diese Erfassungsmittel können vorteilhafterweise die genannten Umgebungsparameter und deren Änderungen erfasst werden und beispielsweise an die Anzeigeeinrichtung übermittelt werden, welche in korrespondierender Weise in Abhängigkeit von den übermittelten und empfangenen Umgebungsparametern eine entsprechende Änderung des Symbols bewirkt. Auch kann es vorgesehen sein, dass die von den genannten Erfassungsmitteln erfassten Umgebungsparameter an eine Steuereinrichtung, die beispielsweise Teil der Navigationseinrichtung sein kann, übermittelt werden, welche darauf basierend eine entsprechende Ansteuerung der Anzeigeeinrichtung vornimmt. Entsprechend gehört zur Erfindung auch die Steuervorrichtung für das Kraftfahrzeug und/oder der Navigationseinrichtung und/oder der Anzeigeeinrichtung. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Darstellung eines Kraftfahrzeugs mit einer Anzeigeeinrichtung zum Anzeigen der aktuell zulässigen Höchstgeschwindigkeit gemäß einem Ausführungsbeispiel der Erfindung;
- Fig. 2: eine schematische Darstellung der durch die Anzeigeeinrichtung angezeigten Darstellung gemäß einem Beispiel, welches nicht der beanspruchten Erfindung entspricht;
- Fig. 3: ein Ablaufdiagramm zur Veranschaulichung eines Verfahrens zum Anzeigen der aktuell zulässigen Höchstgeschwindigkeit gemäß einem Ausführungsbeispiel der Erfindung; und
- Fig. 4: ein Ablaufdiagramm zur Veranschaulichung eines Verfahrens zum Anzeigen der aktuell zulässigen Höchstgeschwindigkeit gemäß einem weiteren Ausführungsbeispiel der Erfindung.

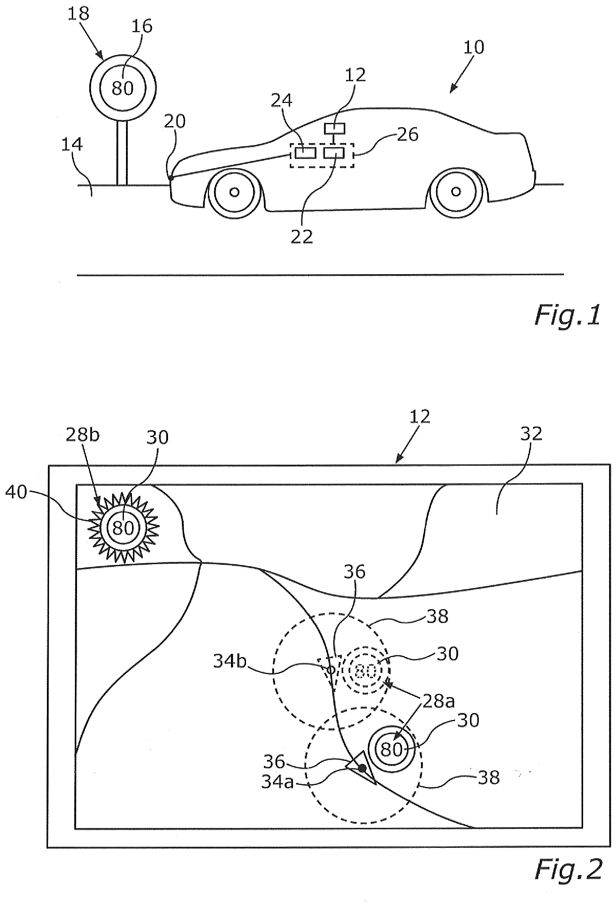

Fig. 1 zeigt eine schematische Darstellung eines Kraftfahrzeugs 10 mit einer Anzeigeeinrichtung 12 zum Anzeigen einer für einen aktuell befahrenen Streckenabschnitt 14 erfassten, aktuell zulässigen Höchstgeschwindigkeit 16 gemäß einem Ausführungsbeispiel der Erfindung. Die aktuell zulässige Höchstgeschwindigkeit 16 wird in diesem Beispiel durch ein entsprechendes Verkehrszeichen 18 vorgegeben. Um die aktuell zulässige Höchstgeschwindigkeit 16 zu erfassen, kann das Kraftfahrzeug 10 beispielsweise eine Kamera 20 aufweisen. Das durch die Kamera 20 aufgenommene Bild vom Verkehrszeichen 18 kann einer Prozessoreinrichtung 22 zugeführt werden, die das aufgenommene Bild, zum Beispiel durch Ausführung einer Zeichenerkennungssoftware, auswertet und daraus die aktuell zulässige Höchstgeschwindigkeit 16 extrahiert. Die Prozessoreinrichtung 22 kann gleichzeitig auch zur Ansteuerung der Anzeigeeinrichtung 12 ausgebildet sein oder die Anzeigeeinrichtung 12 kann auch eine separate Steuereinrichtung aufweisen. In Folge der Erfassung der aktuell zulässigen Höchstgeschwindigkeit 16 zeigt die Anzeigeeinrichtung 12 ein Symbol 28a, 28b (vgl. Fig. 2) an, welches einen Zahlenwert 30 umfasst, der die aktuell zulässige Höchstgeschwindigkeit 16 repräsentiert.

Das Kraftfahrzeug 10 bzw. die Anzeigeeinrichtung 12 ist nun dazu ausgelegt, eine von einer Änderung des Zahlenwerts 30 verschiedene Änderung des Symbols in Abhängigkeit von einer Änderung zumindest eines erfassten Umgebungsparameters zu bewirken. Diese Änderung kann dabei zum einen die Änderung einer aktuellen geographischen Position betreffen, zu deren Erfassung das Kraftfahrzeug 10 zum Beispiel einen GPS-Empfänger 24 aufweisen kann. Zum anderen kann diese Änderung auch die Änderung der aktuell zulässigen Höchstgeschwindigkeit 16 betreffen, welche durch die Kamera 20 und die Prozessoreinrichtung 22 detektiert werden kann. Der GPS-Empfänger 24 und die Prozessoreinrichtung 22 und optional auch die Anzeigeeinrichtung 12 können dabei Teil einer Navigationseinrichtung 28 des Kraftfahrzeugs 10 sein. Zudem ist es auch denkbar, dass die von der Kamera 20 erfassten Bilddaten durch eine der Kamera 20 zugeordnete separate Prozessoreinrichtung (nicht dargestellt) ausgewertet werden und erst anschließend an die Navigationseinrichtung 28 übermittelt werden. Die durch die erfassten Änderungen des Umgebungsparameters bewirkten vorteilhaften Änderungen des Symbols 28a, 28b werden nun anhand von Fig. 2 näher erläutert.

Fig. 2 zeigt dabei eine schematische Darstellung der Anzeigeeinrichtung 12 und der durch diese bereitgestellte Anzeige, welche nicht der beanspruchten Erfindung entspricht. Die Anzeige des Symbols 28a erfolgt in Abhängigkeit von einer Änderung der aktuellen geografischen Position. Die Anzeigeeinrichtung 12 bzw. die Navigationseinrichtung 28 stellt hierzu zunächst eine Kartendarstellung 32 bereit, die auf der Anzeigeeinrichtung 12 angezeigt wird. In dieser Kartendarstellung 32 wird zum einen die Position 34a des Kraftfahrzeugs 10 als zweites Symbol 36 dargestellt, was ein nicht zur Erfindung gehörendes Beispiel darstellt. Zudem ist in der Darstellung in Fig. 2 auch noch die aktuelle Position 34b zu einem vorhergehenden Zeitpunkt veranschaulicht, wobei das zugeordnete zweite Symbol 36 gestrichelt dargestellt ist, um die zeitliche Darstellungsänderung bei einer Positionsänderung des Kraftfahrzeugs zu illustrieren. Das die aktuelle Höchstgeschwindigkeit 16 repräsentierende Symbol 28a wird nun in einem vorbestimmten Bereich 38, der in Fig. 2 schematisch als gestrichelter Kreis veranschaulicht ist, jedoch von der Anzeigeeinrichtung 12 nicht dargestellt wird, an der aktuelle Position 34a, 34b dargestellt. Ändert sich also die aktuelle Position 34a, 34b, so bewegt sich auch das diese Position repräsentierende Symbol 28a, sowie der vorbestimmte Bereich 38 relativ zur übrigen Kartendarstellung 32 mit.

Dies hat den großen Vorteil, dass ein Fahrer, der auf die Navigationsanzeige, die durch die Anzeigeeinrichtung 12 bereitgestellt wird, blickt, um seine aktuelle Position 34a, 34b zu erfahren oder auch den aktuell befahrenen Straßenabschnitt bzw. Streckenabschnitt 14, damit auch gleichzeitig erkennen kann, ob und welche aktuell zulässige Höchstgeschwindigkeit 16 auf diesem Abschnitt gerade vorgeschrieben ist. Hierdurch kann ein direkter optischer Bezug zur aktuell zulässigen Höchstgeschwindigkeit 16 auf die Straße als momentaner Fahrbereich in der Karte stattfinden. Indem also die von der Verkehrszeichenerkennung angezeigte Geschwindigkeit, welche durch den Zahlenwert 30 repräsentiert wird, der aktuellen Position folgt, ist somit unmittelbar im Kontext zu der Straße, auf der man im Moment fährt auch die aktuell zulässige Höchstgeschwindigkeit 16 zu erkennen. Mit Blick auf die Karte im Navigationsgerät wird sofort die vorgegebene Geschwindigkeit in Bezug auf die Straße auf der man sich im Moment befindet, erkannt.

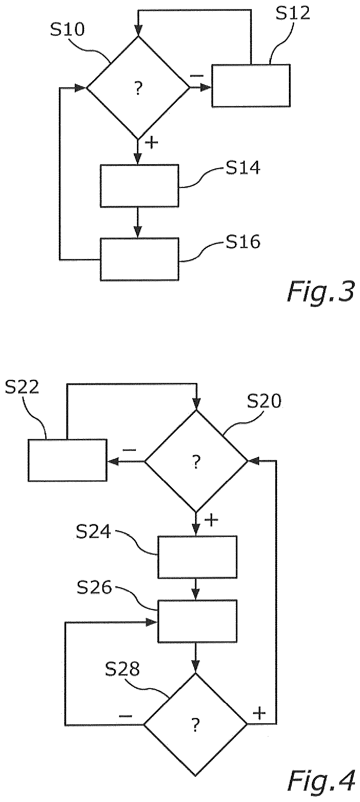

Diese positionsabhängige Änderung des Symbols 28a wird nun anhand von Fig. 3 nochmal näher erläutert.

Fig. 3 zeigt dabei ein Ablaufdiagramm zur Veranschaulichung des Verfahrens zum Anzeigen der aktuell zulässigen Höchstgeschwindigkeit 16, gemäß welchem eine Änderung des Symbols 28a in Abhängigkeit von einer Änderung der aktuellen geografischen Position des Kraftfahrzeugs 10 erfolgt, gemäß einem Ausführungsbeispiel der Erfindung. Hierzu wird in S10 überprüft, ob sich die aktuelle Position des Kraftfahrzeugs 10 geändert hat. Diese Überprüfung kann auf Basis einer fortwährenden Positionsermittlung des Kraftfahrzeugs 10, beispielsweise durch den GPS-Empfänger 24, erfolgen. Wird in S10 keine Positionsänderung erkannt, so wird in S12 die aktuelle Darstellung des Symbols 28a auf der Anzeigeeinrichtung 12 in Bezug auf die übrige Kartendarstellung 32 beibehalten. Wird dagegen in S10 eine Positionsänderung festgestellt, wird in S14 die neue Position für das Symbol 28a berechnet und das Symbol 28a wird in S16 an der neuberechneten Position in der Kartendarstellung 32 angezeigt. Anschließend wird wiederum in S10 überprüft, ob eine erneute Positionsänderung des Kraftfahrzeugs 10 stattgefunden hat, usw.

Eine Änderung des Symbols 28a, 28b kann jedoch zusätzlich noch auf eine andere Weise stattfinden, nämlich in Abhängigkeit von einer Änderung der aktuell zulässigen Höchstgeschwindigkeit 16, was im Folgenden wiederum anhand von Fig. 2 näher erläutert wird. Gemäß diesem Ausführungsbeispiel kann das Symbol 28b wiederum in der Kartendarstellung 32 der Navigationsanzeige angezeigt werden. Wird nun beispielsweise durch die Kamera 20 des Kraftfahrzeugs 10 erfasst, dass sich die aktuell zulässige Höchstgeschwindigkeit 16 ändert, zum Beispiel wenn das Kraftfahrzeug 10 an einem neuen Verkehrszeichen 18 mit einer anderen Geschwindigkeitsvorgabe vorbeifährt, so kann temporär eine Änderung der optischen Erscheinung des Symbols 28b bewirkt werden. Das Symbol 28b kann dazu zum Beispiel für kurze Zeit, zum Beispiel dreimal, blinkend dargestellt werden und/oder auch mit einer Signalfarbe und/oder vergrößert, usw. Dieses Aufblinken soll in diesem Beispiel durch die mit 40 bezeichnete Linie veranschaulicht werden. Durch eine derartige Änderung wird dem Fahrer sehr deutlich visualisiert, dass sich die aktuell zulässige Höchstgeschwindigkeit 16 geändert hat. In den heutigen dichten Verkehrsverhältnissen mit all seinen Facetten der Ablenkung unterstützt das kurze Aufblinken oder die anderweitige optische Kenntlichmachung des Symbols 28b die Wahrnehmung und unterstützt zusätzlich den Fahrer und somit die Sicherheit. Ein bei erfasster Änderung der aktuell zulässigen Höchstgeschwindigkeit 16 derartiges Blinken oder eine anderweitige Änderung der optischen Erscheinung des Symbols 28b muss hierbei nicht notwendigerweise durch die Anzeigeeinrichtung 12 des Navigationsgeräts dargestellt werden, insbesondere nicht notwendigerweise in der Kartendarstellung 32, sondern könnte alternativ oder auch zusätzlich auf jeder beliebigen anderen Anzeigeeinrichtung des Kraftfahrzeugs bereitgestellt werden, wie beispielsweise auch im Kombiinstrument.

Fig. 4 zeigt ein Ablaufdiagramm zur Veranschaulichung des Verfahrens zum Anzeigen der aktuell zulässigen Höchstgeschwindigkeit, bei welchem das Symbol 28b in seiner optischen Erscheinung in Abhängigkeit von einer erfassten Änderung der aktuell zulässigen Höchstgeschwindigkeit 16 verändert wird, gemäß einem Ausführungsbeispiel der Erfindung. Hierzu wird zunächst in S20 überprüft, ob überhaupt eine Geschwindigkeitsbegrenzung vorliegt oder erkannt wurde. Ist dies nicht der Fall, so wird in S22 auch kein entsprechendes Symbol angezeigt. Wird jedoch in S20 erfasst, dass nun eine Geschwindigkeitsbegrenzung vorliegt, zum Beispiel weil ein entsprechendes Verkehrsschild erkannt wurde, so wird das Symbol in S24 auf der Anzeigeeinrichtung 12 dargestellt und dabei gleichzeitig optisch kenntlich gemacht, zum Beispiel durch Blinken. Hierdurch kann der Fahrer vorteilhafterweise darauf aufmerksam gemacht werden, dass nun eine Geschwindigkeitsbegrenzung vorliegt. Nach einer begrenzten Zeitspanne, zum Beispiel nach dreimaligem Blinken, geht die Darstellung des Symbols 28b in S26 in eine Normaldarstellung über, in welcher das Symbol 28b also beispielsweise nicht mehr blinkend dargestellt wird. In S28 wird anschließend überprüft, ob eine Änderung der aktuell zulässigen Höchstgeschwindigkeit 16 erfasst wurde. Ist dies nicht der Fall, so wird das Symbol 28b in S26 weiterhin in der Normaldarstellung dargestellt. Wird jedoch in S28 erfasst, dass eine Änderung der aktuell zulässigen Höchstgeschwindigkeit 16 stattgefunden hat, so wird wiederum in S20 überprüft, ob noch eine Geschwindigkeitsbegrenzung vorliegt. Hat sich beispielsweise die aktuell zulässige Höchstgeschwindigkeit 16 derart geändert, dass nun keine Geschwindigkeitsbegrenzung mehr vorliegt, so wird wiederum in S22 auf die Darstellung des Symbols 28b verzichtet. Ergibt die Überprüfung in S20 jedoch, dass weiterhin eine Geschwindigkeitsbegrenzung vorliegt, so wird das Symbol in S24 wiederum blinkend dargestellt, um den Fahrer auf diese Änderung der aktuell zulässigen Höchstgeschwindigkeit 16 aufmerksam zu machen. Gleichzeitig zu dieser Änderung der optischen Erscheinung kann auch noch der Zahlenwert 30 des Symbols 28b auf die geänderte aktuell zulässige Höchstgeschwindigkeit 16 angepasst werden.

Durch diese Ausführungsform der Erfindung kann die Wahrscheinlichkeit, dass der Fahrer sich ändernde Geschwindigkeitsbegrenzungen beachtet, deutlich erhöht werden.

Auch können diese beiden Arten der Änderung des Symbols 28a, 28b beliebig miteinander kombiniert werden. Beispielsweise kann das Symbol 28a, 28b korrespondierend zur aktuell erfassten Position 34a, 34b in der Kartendarstellung 32 dargestellt werden und gleichzeitig bei erfasster Änderung der aktuell zulässigen Höchstgeschwindigkeit 16 für eine bestimmte Zeitdauer anders, zum Beispiel blinkend, dargestellt werden.

Insgesamt werden so ein Verfahren, eine Anzeigeeinrichtung, eine Navigationseinrichtung und ein Kraftfahrzeug bereitgestellt, welche die Erkennbarkeit einer aktuell zulässigen Höchstgeschwindigkeit sowie auch deren Änderung deutlich verbessern.

### Bezugszeichenliste

- 10: Kraftfahrzeug
- 12: Anzeigeeinrichtung
- 14: Streckenabschnitt
- 16: aktuell zulässige Höchstgeschwindigkeit
- 18: Verkehrszeichen
- 20: Kamera
- 22: Prozessoreinrichtung
- 24: GPS-Empfänger
- 26: Navigationseinrichtung
- 28a, 28b: Symbol
- 30: Zahlenwert
- 32: Kartendarstellung
- 34a, 34b: aktuelle Position
- 36: zweites Symbol
- 38: vorbestimmter Bereich
- 40: Linie

- S10: Schritt
- S12: Schritt
- S14: Schritt
- S16: Schritt
- S20: Schritt
- S22: Schritt
- S24: Schritt
- S26: Schritt
- S28: Schritt

## Patentansprüche

1. Verfahren zum Anzeigen einer für einen aktuell befahrenen Streckenabschnitt (14) erfassten, aktuell zulässigen Höchstgeschwindigkeit (16) mittels einer Anzeigeeinrichtung (12) für ein Kraftfahrzeug (10),
- wobei ein Symbol (28a, 28b) auf der Anzeigeeinrichtung (12) angezeigt wird, welches einen Zahlenwert (30) umfasst, der die aktuell zulässige Höchstgeschwindigkeit (16) repräsentiert,
- wobei eine von einer Änderung des Zahlenwerts (30) verschiedene Änderung des Symbols (28a, 28b) in Abhängigkeit von einer Änderung zumindest eines erfassten Umgebungsparameters erfolgt,
- wobei der zumindest eine erfasste Umgebungsparameter eine aktuelle geographische Position (34a, 34b) darstellt,
- wobei mittels der Anzeigeeinrichtung (12) eine geographische Kartendarstellung (32) angezeigt wird,
- wobei das Symbol (28a) in der geographischen Kartendarstellung (32) angezeigt wird, und
- wobei eine Position des angezeigten Symbols (28a) in Bezug auf die Kartendarstellung in Abhängigkeit von der Änderung der erfassten aktuellen geographischen Position (34a, 34b) geändert wird,
**dadurch gekennzeichnet, dass**
zur Repräsentation der aktuellen Position (34a, 34b) des Kraftfahrzeugs (10) das Symbol (28a) an der aktuellen geographischen Position (34a, 34b) in der Kartendarstellung (32) dargestellt wird und kein die aktuelle Position (34a, 34b) repräsentierendes weiteres Symbol angezeigt wird.

2. Verfahren nach Anspruch 1,
**dadurch gekennzeichnet, dass**
die Änderung des Umgebungsparameters weiterhin eine Änderung der aktuell zulässigen Höchstgeschwindigkeit (16) darstellt.

3. Verfahren nach Anspruch 2,
**dadurch gekennzeichnet, dass**
die optische Erscheinung des Symbols (28a, 28b) bei erfasster Änderung der aktuell zulässigen Höchstgeschwindigkeit (16) für eine begrenzte vorbestimmbare Zeitdauer geändert wird, insbesondere wobei die optische Erscheinung dadurch geändert wird, dass zumindest ein Teil des Symbols (28a, 28b) blinkend dargestellt wird.

4. Anzeigeeinrichtung (12) für ein Kraftfahrzeug zum Anzeigen einer für einen aktuell befahrenen Streckenabschnitt (14) erfassten, aktuell zulässigen Höchstgeschwindigkeit (16),
- wobei die Anzeigeeinrichtung (12) dazu ausgelegt ist, ein Symbol (28a, 28b) auf der Anzeigeeinrichtung (12) anzuzeigen, welches einen Zahlenwert (30) umfasst, der die aktuell zulässige Höchstgeschwindigkeit (16) repräsentiert,
- wobei die Anzeigeeinrichtung (12) dazu ausgelegt ist, eine von einer Änderung des Zahlenwerts (30) verschiedene Änderung des Symbols (28a, 28b) in Abhängigkeit von einer Änderung zumindest eines erfassten Umgebungsparameters zu bewirken,
- wobei der zumindest eine erfasste Umgebungsparameter eine aktuelle geographische Position (34a, 34b) darstellt,
- wobei die Anzeigeeinrichtung (12) dazu ausgelegt ist, eine geographische Kartendarstellung (32) anzuzeigen und das Symbol (28a) in der geographischen Kartendarstellung (32) anzuzeigen,
- wobei die Anzeigeeinrichtung (12) dazu ausgelegt ist, eine Position des angezeigten Symbols (28a) in Bezug auf die Kartendarstellung in Abhängigkeit von der Änderung der erfassten aktuellen geographischen Position (34a, 34b) zu ändern,
**dadurch gekennzeichnet, dass**
die Anzeigeeinrichtung (12) dazu ausgelegt ist, zur Repräsentation der aktuellen Position (34a, 34b) des Kraftfahrzeugs (10) das Symbol (28a) an der aktuellen geographischen Position (34a, 34b) in der Kartendarstellung (32) darzustellen, ohne dass ein die aktuelle Position (34a, 34b) repräsentierendes weiteres Symbol angezeigt wird.

5. Navigationseinrichtung (26) mit einer Anzeigeeinrichtung (12) nach Anspruch 4.

6. Kraftfahrzeug (10) mit einer Anzeigeeinrichtung (12) nach Anspruch 5.

## Claims

1. A method for displaying a currently permissible maximum speed (16) detected for a currently traveled route section (14) by means of a display device (12) for a motor vehicle (10),
- wherein a symbol (28a, 28b) is displayed on the display device (12), which comprises a numerical value (30), which constitutes the currently permissible maximum speed (16),
- wherein a change of the symbol (28a, 28b) different from a change of the numerical value (30) takes place depending on a change at least of one detected environmental parameter.
- wherein the at least one detected environmental parameter constitutes a current geographical position (34a, 34b),
- wherein a geographical map representation (32) is displayed by means of the display device (12),
- wherein the symbol (28a) is displayed in the geographical map representation (32), and
- wherein a position of the displayed symbol (28a) is changed with respect to the map representation depending on the change of the detected current geographical position (34a, 34b),
**characterized in that**
in order to represent the current position (34a, 34b) of the motor vehicle (10), the symbol (28a) is represented at the current geographical position (34a, 34b) in the map representation (32) and no further symbol representing the current position (34a, 34b) is displayed.

2. The method according to claim 1,
**characterized in that**
the change of the environmental parameter furthermore constitutes a change in the currently permissible maximum speed (16).

3. The method according to claim 2,
**characterized in that**
the visual appearance of the symbol (28a, 28b), when a change in the currently permissible maximum speed (16) is detected, is changed for a limited predetermined period of time, in particular, wherein the visual appearance is changed **in that** at least part of the symbol (28a, 28b) is displayed in a flashing manner.

4. A display device (12) for a motor vehicle for displaying a currently permissible maximum speed (16) detected for a currently traveled route section (14),
- wherein the display device (12) is configured to display a symbol (28a, 28b) on the display device (12), which comprises a numerical value (30), which represents the currently permissible maximum speed (16),
- wherein the display device (12) is configured to bring about a change of the symbol (28a, 28b) different from a change in the numerical value (30) depending on a change at least of one detected environmental parameter,
- wherein the at least one detected environmental parameter constitutes a current geographical position (34a, 34b),
- wherein the display device (12) is configured to display a geographical map representation (32) and to display the symbol (28a) in the geographical map representation (32),
- wherein the display device (12) is configured to change a position of the displayed symbol (28a) with respect to the map representation depending on the change of the detected current geographical position (34a, 34b),
**characterized in that**
the display device (12) is configured, in order to represent the current position (34a, 34b) of the motor vehicle (10), to represent the symbol (28a) at the current geographical position (34a, 34b) in the map representation (32), without a further symbol representing the current position (34a, 34b) being displayed.

5. A navigation device (26) with a display device (12) according to claim 4.

6. A motor vehicle (10) with a display device (12) according to claim 5.

## Revendications

1. Procédé d'affichage d'une vitesse maximale (16) actuellement autorisée, détectée pour un tronçon de route (14) actuellement parcouru, au moyen d'un équipement d'affichage (12) pour un véhicule automobile (10),
- un symbole (28a, 28b) étant affiché sur l'équipement d'affichage (12) et comprenant une valeur chiffrée (30) qui représente la vitesse maximale (16) actuellement autorisée,
- une variation du symbole (28a, 28b) différente d'une variation de la valeur chiffrée (30) intervenant en fonction d'une variation d'au moins un paramètre d'environnement détecté,
- l'au moins un paramètre d'environnement détecté présentant une position (34a, 34b) géographique actuelle,
- une présentation cartographique (32) géographique étant affichée au moyen de l'équipement d'affichage (12),
- le symbole (28a) étant affiché dans la présentation cartographique (32) géographique, et
- une position du symbole (28a) affiché étant modifiée par rapport à la présentation cartographique en fonction de la variation de la position (34a, 34b) géographique actuelle détectée,
**caractérisé en ce que**,
pour la représentation de la position (34a, 34b) actuelle du véhicule automobile (10), le symbole (28a) est présenté au niveau de la position (34a, 34b) géographique actuelle dans la présentation cartographique (32), et aucun autre symbole représentant la position (34a, 34b) actuelle n'est affiché.

2. Procédé selon la revendication 1,
**caractérisé en ce que**
la variation du paramètre d'environnement présente en outre une variation de la vitesse maximale (16) actuellement autorisée.

3. Procédé selon la revendication 2,
**caractérisé en ce que**
l'apparence visuelle du symbole (28a, 28b) lors de la variation détectée de la vitesse maximale (16) actuellement autorisée est modifiée pendant une durée pouvant être prédéfinie limitée, en particulier l'apparence visuelle étant modifiée par le fait qu'au moins une partie du symbole (28a, 28b) est présentée de façon clignotante.

4. Équipement d'affichage (12) pour un véhicule automobile, destiné à l'affichage d'une vitesse maximale (16) actuellement autorisée détectée pour un tronçon de route (14) actuellement parcouru,
- l'équipement d'affichage (12) étant conçu pour afficher un symbole (28a, 28b) sur l'équipement d'affichage (12), lequel symbole comprend une valeur chiffrée (30) qui représente la vitesse maximale (16) actuellement autorisée,
- l'équipement d'affichage (12) étant conçu pour provoquer une variation du symbole (28a, 28b) différente d'une variation de la valeur chiffrée (30) en fonction d'une variation d'au moins un paramètre d'environnement détecté,
- l'au moins un paramètre d'environnement détecté présentant une position (34a, 34b) géographique actuelle,
- l'équipement d'affichage (12) étant conçu pour afficher une présentation cartographique (32) géographique, et pour afficher le symbole (28a) dans la présentation cartographique (32) géographique,
- l'équipement d'affichage (12) étant conçu pour modifier une position du symbole (28a) affiché par rapport à la présentation cartographique en fonction de la variation de la position (34a, 34b) géographique actuelle détectée,
**caractérisé en ce que**
l'équipement d'affichage (12) est conçu pour, en vue de la représentation de la position (34a, 34b) actuelle du véhicule automobile (10), présenter le symbole (28a) au niveau de la position (34a, 34b) géographique actuelle dans la présentation cartographique (32) sans qu'un autre symbole représentant la position (34a, 34b) actuelle soit affiché.

5. Équipement de navigation (26) avec un équipement d'affichage (12) selon la revendication 4.

6. Véhicule automobile (10) avec un équipement d'affichage (12) selon la revendication 5.
